# EUROPÄISCHE PATENTSCHRIFT

(11) **EP 1 435 026 B1**
(45) Veröffentlichungstag und Bekanntmachung des Hinweises auf die Patenterteilung: **28.06.2006**
(21) Anmeldenummer: 02776732.6
(22) Anmeldetag: 26.09.2002
(51) Int. Cl.: G05B 19/418, G05B 19/042

(54) **SYSTEM UND VERFAHREN ZUR DATENAUSGABE EINES GERÄTS, INSBESONDERE EINES AUTOMATISIERUNGSGERÄT ÜBER EINE STANDARDISIERTE SCHNITTSTELLE MIT VARIABLENERSETZUNG ÜBER EINEN ECHOSERVER**
SYSTEM AND METHOD FOR THE DATA EMISSION OF AN APPLIANCE, ESPECIALLY AN AUTOMATION APPLIANCE, BY MEANS OF A STANDARDISED INTERFACE WITH REPLACEMENT OF VARIABLES BY MEANS OF AN ECHO SERVER
SYSTEME ET PROCEDE D'EMISSION DE DONNEES D'UN APPAREIL, EN PARTICULIER D'UN APPAREIL D'AUTOMATISATION, PAR L'INTERMEDIAIRE D'UNE INTERFACE NORMALISEE AVEC REMPLACEMENT DE VARIABLES PAR L'INTERMEDIAIRE D'UN SERVEUR ECHO

(30) Priorität: 08.10.2001 DE 10149481
(43) Veröffentlichungstag der Anmeldung: 07.07.2004
(73) Patentinhaber: SIEMENS AKTIENGESELLSCHAFT, 80333 München (DE)
(72) Erfinder: LANGE, Ronald, 90766 Fürth (DE); SPRINGER, Frank, 91224 Hohenstadt (DE)
(86) Internationale Anmeldenummer: PCT/DE2002/003647
(87) Internationale Veröffentlichungsnummer: WO 2003/034163

(56) Entgegenhaltungen:
- WO-A-00/76169
- WO-A-01/22681
- WO-A-01/57651
- WO-A-98/53581
- DE-A- 19 929 933
- US-A1- 2001 047 383

## Beschreibung

System und Verfahren zur Datenausgabe eines Geräts, insbesondere eines Automatisierungsgerät über eine standardisierte Schnittstelle mit Variablenersetzung über einen Echoserver

Die Erfindung betrifft ein System und Verfahren zum Zugriff auf ein Gerät, insbesondere ein Automatisierungsgerät mit einer standardisierten Schnittstelle.

Ein derartiges System und Verfahren kommt beispielsweise im Bereich der Automatisierungstechnik, bei Produktions- und Werkzeugmaschinen etc. zum Einsatz. In der Automatisierungstechnik haben sich einheitliche Schnittstellen für den Zugriff auf die Geräte durchgesetzt. Beispiele dafür sind OPC und PROFInet. Die Ausprägungen dieser Schnittstellen sind dabei immer an eine gewisse Kommunikationstechnologie gebunden, in den beiden genannten Fällen ist dies COM/DCOM. Die Anforderung ist jedoch, diese Schnittstellen auch über neue Kommunikationstechnologien wie z.B. Webzugriff ansprechen zu können.

Aus DE-A 199 29 933 ist ein Automatisierungsgerät zur Kommunikation mit mindestens einer Datenverarbeitungsvorrichtung über ein Datennetz bekannt. Das Automatisierungsgerät weist einen Speicher zur Speicherung von Kommunikationsdaten in Form von Bediendialogen zur Bedienung des Automatisierungsgeräts und zur Kommunikation mit einem Browser in der Datenverarbeitungsvorrichtung und von Geräteinformationen für Service und Support auf. Die im Speicher gespeicherten Kommunikationsdaten und Geräteinformationen werden vom Automatisierungsgerät zur Datenverarbeitungsvorrichtung über das Datennetz mittels eines Standardprotokolls zwischen dem Automatisierungsgerät und dem Browser übertragen.

Aus der WO 00/76169 A2 ist ein Verfahren und ein System zum Zugriff auf Elemente eines Netzwerkes über Internet bekannt.

Ein Internet-Gerät kommuniziert dabei mit einem Nicht-Internet-Gerät in der Weise, dass eine Verbindung über das Internet zu einem sogenannten Contoll-Master aufgebaut wird, der einen Aufruf empfängt. In dem Aufruf ist eine IP-Adresse des zu kontaktierenden Geräts enthalten. Diese Adresse wird mit einem Port verglichen, welches die Verbindungsadresse zu dem zu verbindenden Gerät enthält. Dies geschieht mittels eines sogenannten Verbindungsobjekts.

Der Erfindung liegt die Aufgabe zugrunde, ein System und ein Verfahren zum Zugriff auf ein Gerät anzugeben, das keine Veränderung des Geräts selbst und auch keine Zusatzprojektierung einer mit dem Gerät verbundenen Datenverarbeitungsvorrichtung erfordert, wobei eine Datenausgabe von Daten des Geräts in einem frei wählbaren Datenformat auch von einem entfernten Ort möglich sein soll.

Diese Aufgabe wird durch ein Verfahren bzw. durch ein System mit den in den Ansprüchen 1 bzw. 8 angegebenen Merkmalen gelöst.

Der Erfindung liegt die Erkenntnis zugrunde, dass bei bisherigen Lösungen eine Ergänzung der Geräte um ein neues Kommunikationsprotokoll erforderlich war, beispielsweise der Einsatz von Wrappern (d.h. Kommunikationsumsetzer) auf Client- oder Geräteseite, der Einsatz von zusätzlichen Servern (Geräten), d.h. der Wrapper wird auf ein eigenes Gerät ausgelagert. Dabei ist aber typischerweise eine Projektierung dieses Servers nötig (z.B. welche unterlagerten Geräte gibt es). Bei einer Anlagenerweiterung/-änderung muss also auch die Projektierung des Servers angepasst werden. Die Gründe für die Notwendigkeit der Projektierung sind dabei: Kein einheitliches Zugriffsinterface zu den Geräten. Damit muss bei jedem Gerät neu das Zugriffsinterface (Kommunikationsprotokoll, Methodensignatur, ...) beim Server projektiert werden bzw. sogar entsprechende Treibersoftware geladen werden. Für den Zugriff auf die Geräte muss der Server deren Netzwerk-Adresse kennen. Diese muss somit projektiert werden bzw. bei einer Änderung entsprechend nachgezogen werden.

Bei dem erfindungsgemäßen Verfahren hingegen erfolgt der Zugriff auf das Gerät über eine standardisierte Schnittstelle des völlig unveränderten Geräts. Möglich wird dies durch das Senden eines Aufrufs von der ersten Datenverarbeitungsvorrichtung aus über ein Datennetz, z.B. Internet an die zweite Datenverarbeitungsvorrichtung, wobei in dem Aufruf Zusatzdaten in Form einer Adresse des betreffenden Geräts enthalten sind. In der zweiten Datenverarbeitungsvorrichtung werden diese Zusatzdaten aus den Daten des Aufrufs extrahiert und es erfolgt über die so extrahierte Adresse über die standardisierte Schnittstelle des Geräts. Die nötige Zusatzinformation wird dabei nicht als Projektierung des Servers, sondern als Teil der Adresse des Servers mitgegeben. Zur Adressierung werden URLs (Uniform Resource Locator) verwendet. So kann der Server z.B. eine HTML Seite von einem PROFInet Gerät erzeugen, dessen Adresse es erst bei der Anfrage erhält. Eine "Seite" wird also z.B. über http://hostx:5001/MiniCBA/hosty abgefragt, wobei "hostx" der DNS Name der zweiten Datenverarbeitungsvorrichtung ind Form eines Proxyservers und "hosty" der DNS Name des Geräts ist.

Die Besonderheit der Erfindung liegt in der Verwendung eines Servers, der nicht projektiert werden muss, da die nötige Zusatzinformation in der Adressierung enthalten ist. Dieses Verfahren nutzt die Tatsache, dass die Adressierung und das Zugriffsinterface auf OPC Server oder PROFInet Geräte einheitlich ist. Somit kann ein neues Kommunikationsprotokoll (also z.B. der Zugriff über Browser per HTTP und HTML Seite) ergänzt werden, ohne das die Geräte dazu erweitert werden müssen oder der o.g Server projektiert werden muss. In der Automatisierungstechnik besteht - insbesondere in der Inbetriebnahmephase - die Notwendigkeit, Daten von/zu den Automatisierungsgeräten zu lesen/schreiben. Dabei soll dieser Zugriff oft von (Client-)Geräten geschehen, die keine spezifische Softwareinstallation besitzen (z.B. keine herstellerspezifische Projektiersoftware). Außerdem soll das Format der Antwort beliebig durch den Client bestimmbar sein, z.B. eine HTML Seite, ein Textdatei oder eine Excel-Tabelle. Alle diese Anforderungen werden dadurch gelöst, dass die zweite Datenverarbeitungsvorrichtung die abzufragenden Variablen vom Gerät empfängt, in der Datei die Parameter mit den entsprechenden Variablen des Geräts ersetzt und die Datei quasi als Echoserver an die erste Datenverarbeitungsvorrichtung übermittelt. Zusätzlich kann der Zugriff auf diese Information auch ortsfern geschehen können, d.h. über Internetzugriff.

Der Erfindung liegt weiter die Erkenntnis zugrunde, dass bei bisherigen Lösungen in den Geräten gegebenenfalls projektierbare Dokumente (HTML Seite, Textdatei) hinterlegt werden mussten, bei denen bei einer Anfrage die jeweils gültigen Werte eingetragen werden (im folgenden wird nur die Leserichtung beschrieben, die Schreibrichtung ist analog). Bei dieser Lösung sind also durch den Client nur die auf dem Server vorgefertigten Dokumenttypen abfragbar und auch die gewünschten Variablen nur in eingeschränkter Weise wählbar.

Bei der erfindungsgemäßen Lösung hingegen wird ein Variablenersetzungsalgorithmus insbesondere für beliebige ASCII-Dokumente eingesetzt. Für die Kommunikation wird insbesondere HTTP verwendet. Die Besonderheit der Erfindung besteht weiter darin, dass der Client einen beliebigen Dokumenttyp vorgeben und für die Ersetzung beliebige Variablen angeben kann, während bei den bisherigen Verfahren diese Möglichkeiten auf dem Server typischerweise vorprojektiert sind.

Somit ergibt sich insbesondere auf dem Gebiet der Automatisierungstechnik, d.h. vor allem der Fertigungs- und Prozessautomatisierung die Möglichkeit eines Online-Service- und -Supports sowie eines HMI-Interfaces zum Bedienen- und Beobachten auch Remote, d.h. von einer entfernten Datenverarbeitungsvorrichtung aus, die selbst keine direkte Kommunikationsmöglichkeit mit dem Gerät besitzt.

Ein vorteilhafter Anwendungsfall der Erfindung besteht darin, dass das Gerät ein Automatisierungsgerät, insbesondere ein Profinet-Gerät ist.

Die Erfindung ist wegen der einheitlichen Interfaces von OPC-Servern und beispielsweise Profinet-Geräten besonders vorteilhaft in den Fällen einsetzbar, in denen die standardisierte Schnittstelle des Geräts eine COM- und/oder DCOM-Schnittstelle ist.

Eine Datenausgabe am Ort der Abfrage wird dadurch ermöglicht, dass nach dem Zugreifen auf Informationen des Geräts die Informationen vom Gerät zur zweiten Datenverarbeitungsvorrichtung und von dort über das Datennetz an die erste Datenverarbeitungsvorrichtung übertragen werden.

Ein aufgrund der Verbreitung der Datennetze besonders vorteilhafter Anwendungsfall besteht darin, dass als Datennetz Internet und/oder Intranet und als Kommunikationsprotokoll HTTP vorgesehen ist. Vorteilhafter Weise ist dabei zur Übertragung der vom Gerät abzufragenden Informationen, Antwortdaten HTML und/oder XML vorgesehen.

Eine gezieltere Steuerung des Geräts kann dadurch erreicht werden, dass der Aufruf für das Gerät und/oder die zweite Datenverarbeitungsvorrichtung bestimmte Zusatzparameter enthält, die zur Steuerung des Inhalts und/oder des Formats der Ausgabe der vom Gerät abzufragenden Informationen vorgesehen sind. So kann man über weitere Parameter den Inhalt der Ausgabe und das Format steuern. So kann beispielsweise über http://hostx:5001/MiniCBA?Address=hosty&Hierarchy=3&IsXML=1 angegeben werden, dass man erst die dritte Hierarchiestufe der PROFInet Objekte sehen möchte und das das Ausgabeformat XML sein soll.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Systems zum Zugriff auf ein Automatisierungsgerät über dessen standardisierte Schnittstelle,
- FIG 2: eine schematische Darstellung beispielhafter Aufrufsdaten mit zu extrahierenden Adressdaten,
- FIG 3: eine schematische Darstellung für eine Datenabfrage aus einem Automatisierungsgerät über einen Echoserver und
- FIG 4: eine graphische Nutzeroberfläche für eine Datenabfrage aus einem Automatisierungsgerät über einen Echoserver.

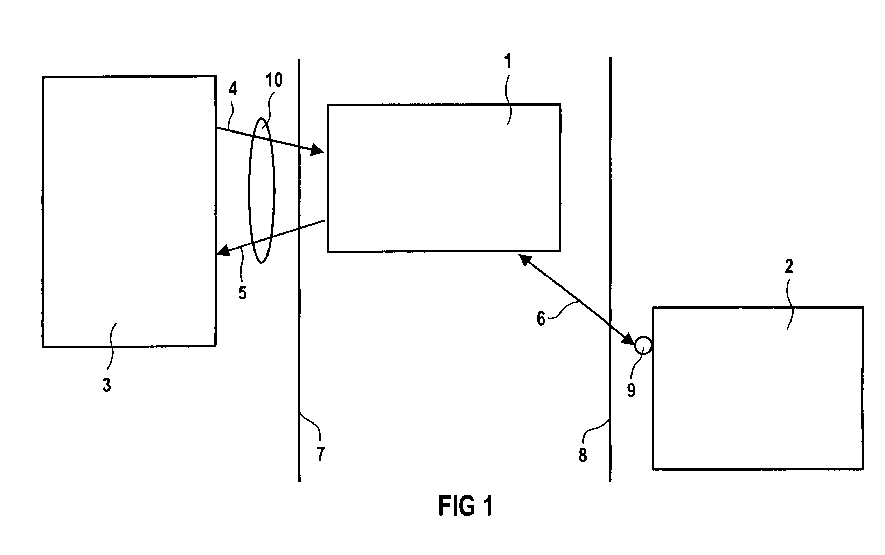

FIG 1 zeigt ein Blockschaltbild eines Ausführungsbeispiels eines Systems zum Zugriff auf ein Automatisierungsgerät 2 über dessen standardisierte Schnittstelle 9 von einer ersten Datenverarbeitungsvorrichtung 3 aus. Das in FIG 1 dargestellte System besteht im wesentlichen aus einer ersten Datenverarbeitungsvorrichtung 3, aus einer zweiten Datenverarbeitungsvorrichtung 1 sowie aus einem Gerät 2, insbesondere einem Automatisierungsgerät für ein Datennetz 10, beispielsweise über Internet erfolgt. Von der ersten Datenverarbeitungsvorrichtung 3 ein Aufruf 4 an die zweiten Datenverarbeitungsvorrichtung 1. Mit einer Trennlinie 7 ist eine mögliche Rechnergrenze zwischen der ersten Datenverarbeitungsvorrichung 3 und der zweiten Datenverarbeitungsvorrichtung 1 gekennzeichnet. In dem Aufruf 4, der an die zweiten Datenverarbeitungsvorrichtung 1 gesendet wird, ist eine Adresse enthalten, die das Gerät 2 kennzeichnet. Die zweite Datenverarbeitungsvorrichtung 1, beispielsweise ein sogenannter Web-Server WEB-SERVER extrahiert aus den Daten des Aufrufs 4 die Adresse des Geräts 2. Über eine Datenverbindung 6 erfolgt dann von der zweiten Datenverarbeitungsvorrichtung 1 ein Datenzugriff an die so extrahierte Adresse des Geräts 2. Der Zugriff erfolgt dabei über eine standardisierte Schnittstelle 9 des Geräts 2.

Mit den Bezugszeichen 8 ist wiederum ein mögliche Rechnergrenze zwischen der zweiten Datenverarbeitungsvorrichtung 1 und dem Gerät 2 gekennzeichnet.

Die Besonderheit des in FIG 1 dargestellten Systems besteht insbesondere darin, dass es mit Hilfe der Adressextraktion in der zweiten Datenverarbeitungsvorrichtung 1 ermöglicht wird, von der ersten Datenverarbeitungsvorrichtung 3 auf Informationsdaten des Geräts 2 zuzugreifen, obwohl ein direkter Zugriff von der ersten Datenverarbeitungsvorrichtung 3 aus nicht möglich ist. Ermöglicht wird dieser indirekte Datenzugriff dadurch, dass die Adresse des Geräts 2 in dem Aufruf 4 enthalten ist und von der zweiten Datenverarbeitungsvorrichtung 1 extrahiert wird. Die Rückübertragung der über die standardisierte Schnittstelle 9 über den Datenkanal 6 abgefragten Informationsdaten erfolgt über einen Rückkanal 5, der beispielsweise wiederum ein Internet-Datennetz 10 benutzt.

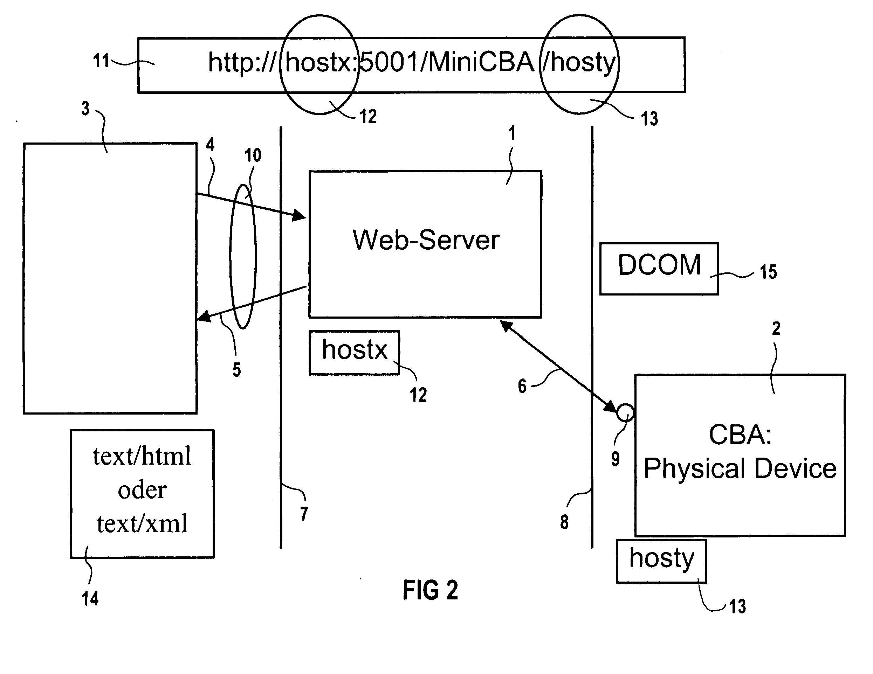

FIG 2 zeigt eine schematische Darstellung beispielhafter Aufrufsdaten 11 mit zu extrahierenden Adressdaten 13 zur Adressierung eines Geräts über dessen standardisierte Schnittstelle. FIG 2 enthält im wesentlichen die bereits im Zusammenhang mit FIG 1 beschriebenen Bestandteile. Darüber hinaus ist in FIG 2 nochmals beispielhaft ein Aufruf 11 dargestellt, der aus einer Internet-Adresse http://hostx:5001/MiniCBA/hosty gebildet wird. Ein erster Bestandteil 12 dieser Adresse, nämlich hostx kennzeichnet dabei die Adresse der zweiten Datenverarbeitungsvorrichtung 1, der als sogenannter Web-Server agiert. Ein weiterer Bestandteil 13 der Adresse 11, nämlich hosty kennzeichnet die Adresse des Geräts 2. Dieser weitere Bestandteil 13 wird in der zweiten Datenverarbeitungsvorrichtung 1 extrahiert, so dass ein Datenzugriff über die standardisierte Schnittstelle 9 des Geräts 2 ermöglicht wird. Die so abgefragten Daten des Geräts 2 werden über die Datenverbindung 6 an die zweite Datenverarbeitungsvorrichtung 1 zurückgesendet und von dort in Antwortdaten 5 an die erste Datenverarbeitungsvorrichtung 3, beispielsweise als Text oder als html-Datei übertragen. Neben der Einbindung der Adressdaten in den Aufruf 4 bzw. in die Adresse 11 ist es weiter möglich, weitere Parameter einzubringen, die den Inhalt der Ausgabe und/oder das Format steuern. So kann beispielsweise angegeben werden, dass man erst eine bestimmte Hierarchiestufe der Geräte 2 sehen möchte und dass ein bestimmtes Ausgabeformat gewünscht ist.

In dem Beispiel der Fig. 2 greift ein Client 3 über http://hostx:5001/MiniCBA/hosty auf den Server mit der (DNS-)Adresse hostx zu. Dort wird aus der URL die Adresse eines PROFInet Geräts extrahiert (hosty) und auf dieses über die durch PROFInet festgelegten Interfaces per COM/DCOM zugegriffen.

Die punktierten Striche in der Abbildung zeigen mögliche Rechnergrenzen. Der rechte Strich zeigt dabei nochmals auf, dass das neue Kommunikationsprotokoll (hier HTTP) und die Erzeugung der Antwort (hier HTML oder XML) nicht in die Geräte integriert werden muss.

Der Aufbau der URL ist hier nur beispielhaft. Genauso gut könnte man auch http://hostx:5001/MiniCBA?Address=hosty oder ähnliches verwenden.

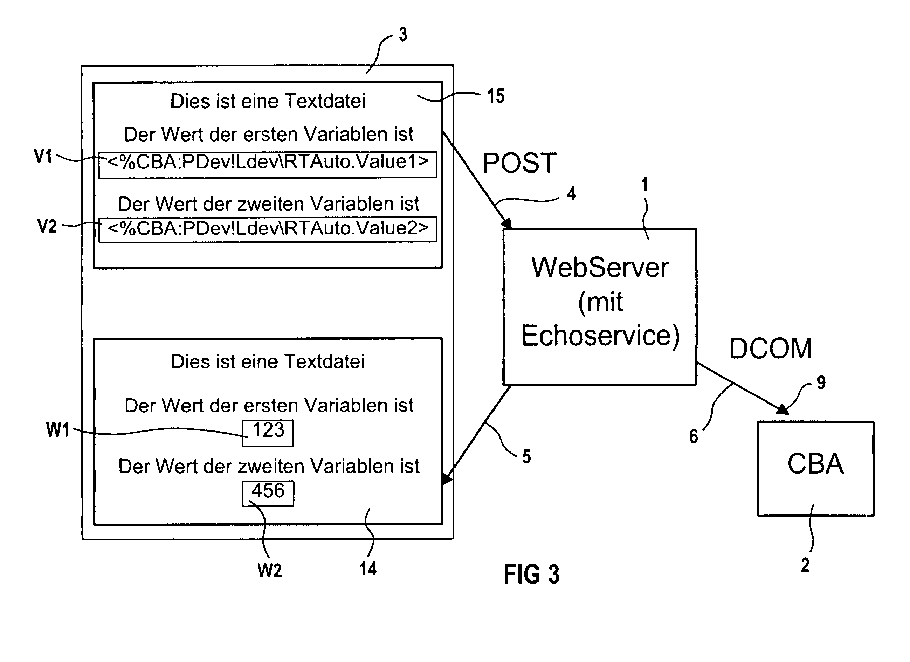

FIG 3 zeigt eine schematische Darstellung für eine Datenabfrage aus einem Automatisierungsgerät 2 über einen sogenannten Echo-Server 1. Dabei werden wiederum im wesentlichen die bereits im Zusammenhang mit den FIG 1 und 2 eingeführten Bezugszeichen verwendet. Im symbolischen Block 3 der ersten Datenverarbeitungsvorrichtung ist eine symbolische Textdatei 15 gezeigt, die neben einem Text auch Variable V1, V2 enthält. Diese Textdatei 15 wird über einen Aufruf 4 an die zweite Datenverarbeitungsvorrichtung 1, den sogenannten Web-Server mit Echoservice übertragen. Der Echoserver 1 greift zunächst über eine Datenverbindung 9 auf das Gerät 2 zu und ermittelt von dort die in der Textdatei abzufragenden Variablenwerte V1, V2, d.h. über die standardisierte Schnittstelle 9 werden entsprechende Werte W1, W2, die den Variablen V1, V2 zugeordnet sind, an den Web-Server 1 zurückgesendet. Der Web-Server 1 trägt diese Werte W1, W2 in die Textdatei 15 ein und sendet eine so entstehende Textdatei 14, welches die Werte W1 = 123 und W2 = 456 enthält an die erste Datenverarbeitungsvorrichtung 3 zurück. Insgesamt ergibt sich somit ein Zugriff von der ersten Datenverarbeitungsvorrichtung 3, beispielsweise einem Client aus, auf ein Automatisierungsgerät 2, ohne dass dort am Gerät selbst eine Änderung oder eine aufwendige Zusatzprojektierung erforderlich ist.

FIG 3 zeigt eine schematische Darstellung für eine Datenabfrage aus einem Automatisierungsgerät 3 über einen Echoserver 1. Im folgenden Ausführungsbeispiel wird eine Textdatei per HTTP-POST an einen Web-Server gesendet. Dieser reicht die Datei an den Echoservice. Dieser scannt die Datei textuell nach zu ersetzenden Variablen (die Syntax dafür ist hier nur beispielhaft). Für jede zu ersetzende Variable holt er den aktuellen Wert (im Ausführungsbeispiel für PROFInet Geräte über DCOM) und ersetzt diesen textuell in der Datei, die danach an den Client zurückgesendet wird.

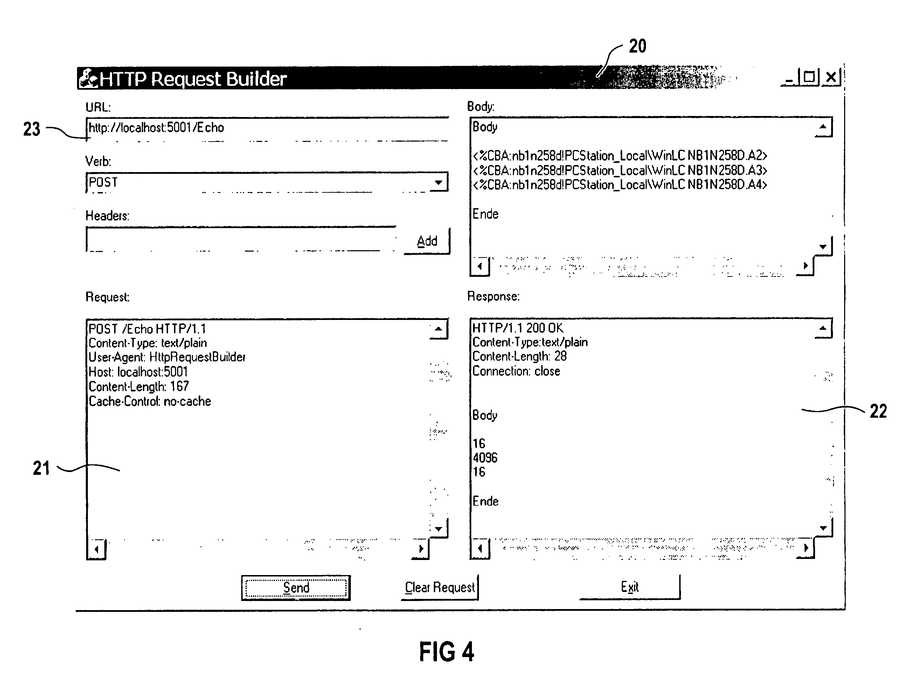

FIG 4 zeigt eine beispielhafte graphische Nutzeroberfläche 20 für eine Datenabfrage aus einem Automatisierungsgerät über einen Echoserver. Die Nutzeroberfläche besteht aus einzelnen Bildschirmbereichen, unter anderem einem ersten Bildschirmbereich 21 zur Kennzeichnung von Abfrageinformationen, einem zweiten Bildschirmbereich 22, der Antwortinformationen einschließlich der extrahierten Variablen des Automatisierungsgeräts enthält, einem dritten Bildschirmbereich 23 zur Kennzeichnung der Aufrufadresse. Eine derartige Nutzeroberfläche stellt eine mögliche Clientapplikation zur Durchführung des erfindungsgemäßen Verfahrens dar.

Zusammenfassend betrifft die Erfindung somit ein System und Verfahren zur Datenausgabe eines Gerät, insbesondere eines Automatisierungsgeräts über dessen standardisierte Schnittstelle. Es wird vorgeschlagen, einen Zugriff auf Daten sowie eine Ausgabe der Daten des Geräts 2 von einer Datenverarbeitungsvorrichtung 3 über ein Datennetz aus dadurch zu erzielen, dass ein Aufruf 4 von einer ersten Datenverarbeitungsvorrichtung 3 aus über ein Datennetz an eine zweite Datenverarbeitungsvorrichtung 1 gesendet wird. Der Aufruf enthält eine Adresse der Geräts sowie eine Datei mit dem zuordenbaren Variablen des Geräts. In der zweiten Datenverarbeitungsvorrichtung 1 wird die Adresse 10 zur Kennzeichnung des Geräts 2 extrahiert und auf Informationen des Geräts 2 über die standardisierte Schnittstelle 9 des Geräts 2 mittels der in der zweiten Datenverarbeitungsvorrichtung 1 extrahierten Adresse zugegriffen. Die zweite Datenverarbeitungsvorrichtung empfängt die abzufragenden Variablen, ersetzt in der Datei die Parameter mit den entsprechenden Variablen des Geräts und übermittelt die Datei quasi als Echoserver an die erste Datenverarbeitungsvorrichtung.

## Patentansprüche

1. Verfahren zum Zugriff auf ein Gerät (2) mit einer standardisierten Schnittstelle (9) mit folgenden Schritten:
• Senden eines Aufrufs (4) von einer ersten Datenverarbeitungsvorrichtung (3) aus über ein Datennetz an eine als Webserver ausgebildete zweite Datenverarbeitungsvorrichtung (1), wobei der Aufruf (4) als Teil der Adresse des Webservers eine Adresse des Geräts (2) sowie eine Datei mit abzufragenden Variablen (V1, V2) des Geräts (2) enthält,
• in der zweiten Datenverarbeitungsvorrichtung (1) Extrahieren der in den Daten des Aufrufs (4) der ersten Datenverarbeitungsvorrichtung (3) an die zweite Datenverarbeitungsvorrichtung (1) enthaltenen Adresse (13) zur Kennzeichnung des Geräts (2) aus der Adresse des Webservers,
• Zugreifen auf Informationen des Geräts (2) über die standardisierte Schnittstelle (9) des Geräts (2) mittels der in der zweiten Datenverarbeitungsvorrichtung (1) extrahierten Adresse,
• in der zweiten Datenverarbeitungsvorrichtung (1) Ersetzen der in der Datei enthaltenen Variablen (V1, V2) durch vom Gerät (2) übermittelte Werte (W1, W2)und
• Senden der Datei mit den Werten (W1, W2) an die erste Datenverarbeitungsvorrichtung (3).

2. Verfahren nach Anspruch 1,
**dadurch gekennzeichnet,**
**dass** als Dateiformat der Datei ein von der ersten Datenverarbeitungsvorrichtung (3) frei wählbares Datenformat, insbesondere HTML-Format, eine Exceltabelle und/oder eine Textformat verwendet wird.

3. Verfahren nach einem der Ansprüche 1 oder 2,
**dadurch gekennzeichnet,**
**dass** das Gerät (2) ein Automatisierungsgerät, insbesondere ein Profinet-Gerät ist und/oder dass die standardisierte Schnittstelle (9) des Geräts (2) eine COM- und/oder DCOM-Schnittstelle ist.

4. Verfahren nach einem der Ansprüche 1 bis 3,
**dadurch gekennzeichnet,**
**dass** nach dem Zugreifen auf Informationen des Geräts (2) die Informationen vom Gerät (2) zur zweiten Datenverarbeitungsvorrichtung (19 und von dort über das Datennetz (10) an die erste Datenverarbeitungsvorrichtung (3) übertragen werden.

5. Verfahren nach einem der Ansprüche 1 bis 4,
**dadurch gekennzeichnet,**
**dass** als Datennetz (10) Internet und/oder Intranet und als Kommunikationsprotokoll HTTP vorgesehen ist.

6. Verfahren nach einem der Ansprüche 1 bis 5,
**dadurch gekennzeichnet,**
**dass** zur Übertragung der vom Gerät (2) abzufragenden Informationen, Antwortdaten HTML und/oder XML vorgesehen ist.

7. Verfahren nach einem der Ansprüche 1 bis 6,
**dadurch gekennzeichnet,**
**dass** der Aufruf für das Gerät und/oder die zweite Datenverarbeitungsvorrichtung (1) bestimmte Zusatzparameter enthält, die zur Steuerung des Inhalts und/oder des Formats der Ausgabe der vom Gerät (2) abzufragenden Informationen vorgesehen sind.

8. System zum Zugriff auf ein Gerät (2) mit einer standardisierten Schnittstelle (9) mit
• einer ersten Datenverarbeitungsvorrichtung (3) zum Senden eines Aufrufs (4) über ein Datennetz an eine als Webserver ausgebildete zweite Datenverarbeitungsvorrichtung (1), wobei der Aufruf (4) als Teil einer Adresse (11) des Webservers eine Adresse (13) des Geräts (2) sowie eine Datei mit abzufragenden Variablen (V1, V2) des Geräts (2) enthält, mit
• in der zweiten Datenverarbeitungsvorrichtung (1) enthaltenen Extraktionsmitteln zum Extrahieren der in den Daten des Aufrufs (4) der ersten Datenverarbeitungsvorrichtung (3) an die zweite Datenverarbeitungsvorrichtung (1) enthaltenen Adresse (13) zur Kennzeichnung des Geräts (2) aus der Adresse (11) des Webservers,
• Zugriffsmitteln zum Zugreifen auf Informationen des Geräts (2) über die standardisierte Schnittstelle (9) des Geräts (2) mittels der in der zweiten Datenverarbeitungsvorrichtung (1) extrahierten Adresse (13),
• in der zweiten Datenverarbeitungsvorrichtung (1) enthaltenen Mitteln zum Ersetzen der in der Datei enthaltenen Variablen (V1, V2) durch vom Gerät (2) übermittelte Werte (W1, W2)und
• in der zweiten Datenverarbeitungsvorrichtung (1) enthaltenen Sendemitteln zum Senden der Datei mit den Werten (W1, W2) an die erste Datenverarbeitungsvorrichtung (3).

9. System nach Anspruch 8,
**dadurch gekennzeichnet,**
**dass** als Dateiformat der Datei ein von der ersten Datenverarbeitungsvorrichtung (3) frei wählbares Datenformat, insbesondere HTML-Format, eine Exceltabelle und/oder eine Textformat verwendet wird.

10. System nach einem der Ansprüche 8 oder 9,
**dadurch gekennzeichnet,**
**dass** das Gerät (2) ein Automatisierungsgerät, insbesondere ein Profinet-Gerät ist und/oder dass die standardisierte Schnittstelle (9) des Geräts (2) eine COM- und/oder DCOM-Schnittstelle ist.

11. System nach einem der Ansprüche 8 bis 10,
**dadurch gekennzeichnet,**
**dass** nach dem Zugreifen auf Informationen des Geräts (2) die Informationen vom Gerät (2) zur zweiten Datenverarbeitungsvorrichtung (19 und von dort über das Datennetz (10) an die erste Datenverarbeitungsvorrichtung (3) übertragen werden.

12. System nach einem der Ansprüche 8 bis 11,
**dadurch gekennzeichnet,**
**dass** als Datennetz (10) Internet und/oder Intranet und als Kommunikationsprotokoll HTTP vorgesehen ist.

13. System nach einem der Ansprüche 8 bis 12,
**dadurch gekennzeichnet,**
**dass** zur Übertragung der vom Gerät (2) abzufragenden Informationen, Antwortdaten HTML und/oder XML vorgesehen ist.

14. System nach einem der Ansprüche 8 bis 13,
**dadurch gekennzeichnet,**
**dass** der Aufruf für das Gerät und/oder die zweite Datenverarbeitungsvorrichtung (1) bestimmte Zusatzparameter enthält, die zur Steuerung des Inhalts und/oder des Formats der Ausgabe der vom Gerät (2) abzufragenden Informationen vorgesehen sind.

15. Computerprogrammprodukt mit Mitteln zur Durchführung eines Verfahrens nach einem der Ansprüche 1 bis 7, wenn das Computerprogramm auf einer Datenverarbeitungsvorrichtung, einem elektronischem Schaltkreis oder einem Automatisierungssystem ausgeführt wird.

## Claims

1. Method for accessing a device (2) with a standardized interface (9) with the following steps:
• sending a call (4) from a first data processing device (3) via a data network to a second data processing device (1) in the form of a web server, where the call (4) contains, as part of the address of the web server, an address of the device (2) and a file with variables (V1, V2) of the device (2) which are to be requested,
• in the second data processing device (1), extracting the address (13) contained in the data of the call (4) from the first data processing device (3) to the second data processing device (1) for identifying the device (2) from the address of the web server,
• accessing information of the device (2) via the standardized interface (9) of the device (2) by means of the address extracted in the second data processing device (1),
• in the second data processing device (1), replacing the variables (V1, V2) contained in the file with values (W1, W2) transferred from the device (2) and
• sending the file with the values (W1, W2) to the first data processing device (3).

2. Method according to Claim 1,
**characterized in that**
a data format that can be freely selected by the first data processing device (3), in particular HTML format, an Excel spreadsheet and/or a text format is used as the file format.

3. Method according to either of Claims 1 or 2,
**characterized in that**
the device (2) is an automation device, in particular a Profinet device and/or the standardized interface (9) of the device (2) is a COM and/or DCOM interface.

4. Method according to one of Claims 1 to 3,
**characterized in that**
after the information of the device (2) has been accessed the information is transferred from the device (2) to the second data processing device (19) and from there via the data network (10) to the first data processing device (3).

5. Method according to one of Claims 1 to 4,
**characterized in that**
the Internet and/or intranet is used as the data network (10) and HTTP is used as the communication protocol.

6. Method according to one of Claims 1 to 5,
**characterized in that**
HTML and/or XML is used for transferring the information, response data, to be requested from the device (2).

7. Method according to one of Claims 1 to 6,
**characterized in that**
the call for the device and/or the second data processing device (1) contains certain additional parameters for controlling the content and/or format of the output of the information to be requested from the device (2).

8. System for accessing a device (2) with a standardized interface (9) with
• a first data processing device (3) for sending a call (4) via a data network to a second data processing device (1) in the form of a web server, where the call (4) contains, as part of an address (11) of the web server, an address (13) of the device (2) and a file with variables (V1, V2) of the device (2) which are to be requested, with
• extraction means contained in the second data processing device (1) for extracting the address (13) contained in the data of the call (4) of the first data processing device (3) to the second data processing device (1) for identifying the device (2) from the address (11) of the web server,
• access means for accessing information of the device (2) via the standardized interface (9) of the device (2) by means of the address (13) extracted in the second data processing device (1),
• means contained in the second data processing device (1) for replacing the variables (V1, V2) contained in the file with values (W1, W2) transferred from the device (2) and
• sending means contained in the second data processing device (1) for sending the file with the values (W1, W2) to the first data processing device (3).

9. System according to Claim 8,
**characterized in that**
a data format that can be freely selected by the first data processing device (3), in particular HTML format, an Excel spreadsheet and/or a text format is used as the file format.

10. System according to either of Claims 8 and 9,
**characterized in that**
the device (2) is an automation device, in particular a Profinet device and/or the standardized interface (9) of the device (2) is a COM and/or DCOM interface.

11. System according to one of Claims 8 to 10,
**characterized in that**
after the information of the device (2) has been accessed the information is transferred from the device (2) to the second data processing device (19) and from there via the data network (10) to the first data processing device (3).

12. System according to one of Claims 8 to 11,
**characterized in that**
the Internet and/or intranet is used as the data network (10) and HTTP is used as the communication protocol.

13. System according to one of Claims 8 to 12,
**characterized in that**
HTML and/or XML is used for transferring the information, response data, to be requested from the device (2).

14. System according to one of Claims 8 to 13,
**characterized in that**
the call for the device and/or the second data processing device (1) contains certain additional parameters for controlling the content and/or format of the output of the information to be requested from the device (2).

15. Computer program product with means for implementing a method according to one of Claims 1 to 7 if the computer program is embodied on a data processing device, an electronic circuit or an automation system.

## Revendications

1. Procédé d'accès à un appareil (2) avec une interface normalisée (9) comprenant les étapes suivantes :
• émission d'un appel (4) par un premier dispositif de traitement de données (3) par l'intermédiaire d'un réseau de données vers un deuxième dispositif de traitement de données (1) conçu comme un serveur web, l'appel (4) contenant comme partie de l'adresse du serveur web une adresse de l'appareil (2) ainsi qu'un fichier avec des variables à demander (V1, V2) de l'appareil (2),
• dans le deuxième dispositif de traitement de données (1), extraction de l'adresse (13) contenue dans les données de l'appel (4) du premier dispositif de traitement de données (3) au deuxième dispositif de traitement de données (1), afin de caractériser l'appareil (2), à partir de l'adresse du serveur web,
• accès à des informations de l'appareil (2) par l'intermédiaire de l'interface normalisée (9) de l'appareil (2) au moyen de l'adresse extraite dans le deuxième dispositif de traitement de données (1),
• dans le deuxième dispositif de traitement de données (1), remplacement des variables (V1, V2) contenues dans le fichier par des valeurs (W1, W2) transmises par l'appareil (2), et
• émission du fichier avec les valeurs (W1, W2) vers le premier dispositif de traitement de données (3).

2. Procédé selon la revendication 1,
**caractérisé par le fait que** l'on utilise comme format du fichier un format de données pouvant être librement choisi par le premier dispositif de traitement de données (3), notamment le format HTML, un tableau Excel et/ou un format de texte.

3. Procédé selon l'une des revendications 1 ou 2,
**caractérisé par le fait que** l'appareil (2) est un appareil d'automatisation, notamment un appareil Profinet, et/ou que l'interface normalisée (9) de l'appareil (2) est une interface COM et/ou DCOM.

4. Procédé selon l'une des revendications 1 à 3,
**caractérisé par le fait que**, après l'accès à des informations de l'appareil (2), les informations sont transmises par l'appareil (2) au deuxième dispositif de traitement de données (1) et de là par l'intermédiaire du réseau de données (10) au premier dispositif de traitement de données (3).

5. Procédé selon l'une des revendications 1 à 4,
**caractérisé par le fait que**, comme réseau de données (10), il est prévu Internet et/ou Intranet et comme protocole de communication, il est prévu HTTP.

6. Procédé selon l'une des revendications 1 à 5,
**caractérisé par le fait que**, pour la transmission des informations à demander par l'appareil (2), il est prévu des données de réponse HTML et/ou XML.

7. Procédé selon l'une des revendications 1 à 6,
**caractérisé par le fait que** l'appel contient des paramètres supplémentaires qui sont destinés à l'appareil et/ou au deuxième dispositif de traitement de données (1) et qui sont prévus pour la commande du contenu et/ou du format de la sortie des informations à demander par l'appareil (2).

8. Système d'accès à un appareil (2) avec une interface normalisée (9), comportant
• un premier dispositif de traitement de données (3) pour l'émission d'un appel (4) par l'intermédiaire d'un réseau de données vers un deuxième dispositif de traitement de données (1) conçu comme un serveur web, l'appel (4) contenant comme partie d'une adresse (11) du serveur web une adresse (13) de l'appareil (2) ainsi qu'un fichier avec des variables à demander (V1, V2) de l'appareil (2),
• des moyens d'extraction contenus dans le deuxième dispositif de traitement de données (1) pour l'extraction de l'adresse (13) contenue dans les données de l'appel (4) du premier dispositif de traitement de données (3) au deuxième dispositif de traitement de données (1), afin de caractériser l'appareil (2), à partir de l'adresse (11) du serveur web,
• des moyens d'accès pour l'accès à des informations de l'appareil (2) par l'intermédiaire de l'interface normalisée (9) de l'appareil (2) au moyen de l'adresse (13) extraite dans le deuxième dispositif de traitement de données (1),
• des moyens contenus dans le deuxième dispositif de traitement de données (1) pour le remplacement des variables (V1, V2) contenues dans le fichier par des valeurs (W1, W2) transmises par l'appareil (2), et
• des moyens d'émission contenus dans le deuxième dispositif de traitement de données (1) pour l'émission du fichier avec les valeurs (W1, W2) vers le premier dispositif de traitement de données (3).

9. Système selon la revendication 8,
**caractérisé par le fait que** l'on utilise comme format du fichier un format de données pouvant être librement choisi par le premier dispositif de traitement de données (3), notamment le format HTML, un tableau Excel et/ou un format de texte.

10. Système selon l'une des revendications 8 ou 9,
**caractérisé par le fait que** l'appareil (2) est un appareil d'automatisation, notamment un appareil Profinet, et/ou que l'interface normalisée (9) de l'appareil (2) est une interface COM et/ou DCOM.

11. Système selon l'une des revendications 8 à 10,
**caractérisé par le fait que**, après l'accès à des informations de l'appareil (2), les informations sont transmises par l'appareil (2) au deuxième dispositif de traitement de données (1) et de là par l'intermédiaire du réseau de données (10) au premier dispositif de traitement de données (3).

12. Système selon l'une des revendications 8 à 11,
**caractérisé par le fait que**, comme réseau de données (10), il est prévu Internet et/ou Intranet et comme protocole de communication, il est prévu HTTP.

13. Système selon l'une des revendications 8 à 12,
**caractérisé par le fait que**, pour la transmission des informations à demander par l'appareil (2), il est prévu des données de réponse HTML et/ou XML.

14. Système selon l'une des revendications 8 à 13,
**caractérisé par le fait que** l'appel contient des paramètres supplémentaires qui sont destinés à l'appareil et/ou au deuxième dispositif de traitement de données (1) et qui sont prévus pour la commande du contenu et/ou du format de la sortie des informations à demander par l'appareil (2).

15. Programme informatique comportant des moyens pour la mise en oeuvre d'un procédé selon l'une des revendications 1 à 7, lorsque le programme informatique est exécuté sur un dispositif de traitement de données, un circuit électronique ou un système d'automatisation.
